Europäisches Patentamt

European Patent Office

Office européen des brevets

(19)

(11) Numéro de publication: **0 194 988**

**A1**

(12) # DEMANDE DE BREVET EUROPEEN

(21) Numéro de dépôt: **86870031.1**

(22) Date de dépôt: **12.03.86**

(51) Int. Cl.⁴: **G01N 33/53**

(30) Priorité: **14.03.85 BE 648072**

(43) Date de publication de la demande:
**17.09.86 Bulletin 86/38**

(84) Etats contractants désignés:
**AT CH DE FR GB IT LI LU NL SE**

(71) Demandeur: **Bertrand, Alain**
**quai Mativa 25B/062**
**B-4020 Liège(BE)**
Demandeur: **Farnir, Jean**
**rue Jean d'Outremeuse 27/031**
**B-4020 Liège(BE)**
Demandeur: **Maggipinto, Gianni**
**rue du Village 152**
**B-4420 Rocourt(BE)**
Demandeur: **Renard, Edmond**
**rue Alexander Vanstapel 1**
**B-4341 Awans(BE)**
Demandeur: **Sebestyen, Gyözö**
**rue de Heuseux 113**
**B-4630 Micheroux-Soumagne(BE)**

(72) Inventeur: **Maggipinto, Gianni**
**rue du Village 152**
**B-4420 Rocourt(BE)**
Inventeur: **Sebestyen, Gyözö**
**rue de Heuseux 113**
**B-4630 Micheroux-Soumagne(BE)**

(74) Mandataire: **Dellicour, Paul**
**Office de Brevets E. Dellicour rue Fabry 18/012**
**B-4000 Liège(BE)**

(54) **Support pour tests de laboratoire.**

(57) Le support d'analyse consiste en un embout de pipette à usage unique (tip) coaté présentant au moins deux extrémités non bouchées. La réaction a lieu au sein de la pipette (tip) et donne une estimation directe de la réaction de type qualitatif ou un dosage quantitatif.

EP 0 194 988 A1

La présente invention concerne les analyses de chimie clinique réalisées à des fins diagnostiques et est relative à un support pour tests de laboratoire.

Les analyses médicales réalisées actuellement passent par trois étapes principales :

-le prélèvement chez le patient du liquide contenant la substance à analyser,

-le transfert de ce prélèvement par l'intermédiaire d'une pipette vers un procédé analytique,

- le traitement par le procédé analytique.

Lors du transfert on risque de contaminer un échantillon par un autre. L'utilisation d'embouts de pipettes à usage unique, couramment appelés tips, évite ce risque.

Par ailleurs, l'utilisation de tels tips confectionnés en matières plastiques peut entraîner l'adsorption de substances contenues dans l'échantillon à analyser.

Actuellement, un support d'analyse consiste en un récipient avec ouverture unique (tube), une bille, une lame ou encore une plaque avec cupules. Avec tous ces supports une transition est obligatoire entre le prélèvement et le traitement ; c'est-à-dire qu'ils exigent l'étape intermédiaire de transfert.

Pour remédier à ces inconvénients il a paru avantageux suivant l'invention d'utiliser comme support d'analyse l'embout de pipette à usage unique (tip) servant au transfert du liquide à analyser.

Ledit support est chargé de plusieurs substances spécifiques, afin de réaliser l'étape analytique en son sein et d'éviter les adsorptions aspécifiques.

C'est donc la pipette qui devient le siège de la réaction, réduisant les deux dernières étapes citées ci-dessus à une seule.

Dans ce but, un support d'analyse conforme à l'invention est caractérisé en ce qu'il consiste en un embout de pipette à usage unique (tip) coaté de différentes substances propres à chaque procédé analytique, présentant au moins deux extrémités non bouchées.

L'invention consiste aussi en ce que, grâce à un tel support, il est possible de stopper la réaction momentanément et de la reprendre sans altération en vidant, à tout moment choisi par l'utilisateur, le contenu. Ceci permet de suspendre une réaction par séparation des constituants de la phase solide (contenant) et de la phase liquide (contenu) nécessaires à la réaction. Une cinétique de réaction peut ainsi être mesurée.

Suivant l'invention encore, le support est approprié pour être fixé par une ou plusieurs de ses extrémités non bouchées sur un appareil ou instrument servant à aspirer, tel un appareil de répartition de liquides ou des pipettes aspirantes-refoulantes.

On peut ainsi aspirer un liquide contenant un antigène ou un anticorps à coater à l'intérieur du tube, vider et laver ce dernier soit en le branchant sur le répartiteur de liquide, soit par aspiration et rejet de liquide, soit par toute autre méthode, aspirer ensuite un liquide contenant ou non l'anticorps spécifique de l'antigène ou l'antigène correspondant à l'anticorps, vider et laver comme ci-dessus, aspirer ou remplir à l'aide d'un répartiteur de liquide un anticorps ou un deuxième anticorps ou encore un antigène conjugé à un traceur (radioactif, enzymatique, ou tout autre traceur), vider et laver, aspirer éventuellement un révélateur ou remplir comme ci-dessus, et enfin lire la réaction.

Un support d'analyse suivant l'invention peut être utilisé dans diverses applications et, s'il permet de supprimer l'étape intermédiaire, il peut bien entendu être utilisé conjointement avec elle.

**Revendications**

1. Support d'analyse, caractérisé en ce qu'il consiste en un embout de pipette à usage unique (tip) coaté présentant au moins deux extrémités non bouchées.

2. Support d'analyse suivant la revendication 1, caractérisé en ce que, la réaction ayant lieu au sein de la pipette (tip), celle-ci donne une estimation directe de la réaction de type qualitatif ou un dosage quantitatif.

3. Support d'analyse suivant la revendication 1, caractérisé en ce que la pipette (tip), de par sa fonction, peut être facilement vidée de son contenu à tout moment choisi par l'utilisateur pour suspendre une réaction et en ce que ledit contenu après vidange peut être réaspiré pour reprendre la réaction sans altération et mesurer une cinétique de réaction.

4. Support d'analyse suivant une ou plusieurs des revendications précédentes, caractérisé en ce qu'il est approprié pour être fixé par une ou plusieurs extrémités non bouchées sur un appareil à aspirer et/ou à refouler.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-4 053 284 (POSCH)<br>* Revendications 1,4,5 * | 1-4 | G 01 N 33/53 |
| X | WO-A-8 202 211 (COMMONWEALTH SERUM LABORATORIES)<br>* Revendications 1,2,6; figure 2 * | 1-4 | |
| X | US-A-4 254 082 (SHICK)<br>* Revendications 1,4; figure 2 * | 1-3 | |
| X | FR-A-2 222 654 (SUMMA CORP.)<br>* Revendications 1,7; page 6, lignes 9-31 * | 1-3 | |

DOMAINES TECHNIQUES RECHERCHES (Int. Cl.4)

G 01 N

Le présent rapport de recherche a été établi pour toutes les revendications

| Lieu de la recherche | Date d'achèvement de la recherche | Examinateur |
|---|---|---|
| LA HAYE | 04-06-1986 | NICOLAS H.J.F. |